# EUROPEAN PATENT SPECIFICATION

(11) **EP 1 050 257 B1**
(45) Date of publication and mention of the grant of the patent: **03.09.2003**
(21) Application number: 99108799.0
(22) Date of filing: 03.05.1999
(51) Int. Cl.: A47J 31/02

(54) **Coffee drip bag**
Kaffee Brühbeutel
Sachet pour faire du café

(43) Date of publication of application: 08.11.2000
(73) Proprietor: Ohki, CO., LTD., Osaka 542-0081 (JP)
(72) Inventor: Saitoh, Mitsunori, c/o Ohki CO.,LTD., Osaka 542-0081 (JP); Ishihara, Toyoko, c/o Ohki CO.,LTD., Osaka 542-0081 (JP); Miyahara, Fumio, c/o Ohki CO.,LTD., Osaka 542-0081 (JP)
(74) Representative: Leson, Thomas Johannes Alois, Dipl.-Ing.

(56) References cited:
- EP-A- 0 290 801
- EP-A- 0 463 181
- US-A- 4 519 911
- PATENT ABSTRACTS OF JAPAN vol. 1995, no. - , 31 March 1995 (1995-03-31) & JP 06 327563 A (YAMANAKA SANGYO KK), 29 November 1994 (1994-11-29)

## Description

### BACKGROUND OF THE INVENTION

### 1. Field of the Invention

The present invention relates to a drip bag, which is hooked to the top of a container such as a cup, so that drip type coffee can be easily made, of JP-A- 63 327 563 corresponding to the preamble of claim 1.

### 2. Description of the Related Art

Conventionally, a paper drip type coffee making method, which easily allows making genuine coffee, has been widely used. With this paper drip type coffee making method, normally coffee for several individuals (several cups) is made at one time.

Recently the number of people who live alone is increasing, and the number of family members is decreasing because of the trend toward a nuclear family and because of the drop in birth rates. As a consequence, a disposable drip coffee bag for one person (hereinafter called drip bag) for easily making one cup of coffee is commonly seen on the market in various formats, rather than the conventional paper drip type mainly used for making several cups of coffee.

Conventional drip bags on the market are divided into two types depending on the method for setting on a cup. One type is placed on a cup (hereinafter called cup on type), and the other type is placed by hooking a hooking part of a dripper on the wall of a cup such that the dripper is hooked inside the cup (hereinafter called cup in type).

Comparing the cup on type and the cup in type, the cup on type, where a dripper is not soaked in the brewed coffee liquid when brewing coffee, just like the original paper drip type, can prevent components which undesirably affect coffee flavor from seeping out from the ground coffee in the dripper.

There are various formats of the cup on type and the cup in type drippers. One cup on type dripper is a cylindrically formed plastic dripper which is merely placed on the top of a cup for being set on a cup. According to this cup on type dripper, setting of a dripper on a cup is extremely easy. Also, the dripper is made of molded plastic, so the opening of the dripper is not narrowed or closed by deformation when hot water is poured. This makes it easy to pour hot water into the dripper. Also, the dripper is not soaked in the brewed coffee liquid, therefore the dripper can easily be disposed after brewing coffee.

However, some cup on type drippers require assembly before being set on a cup, and some drippers among them even require a manual for this assembly. Some drippers, which are merely placed on the top of a cup, may be unstable and move on the cup. Also cup on type drippers are normally large, so it takes space to stock the drippers or to dispose after use.

In the case of the cup in type, on the other hand, the structure is generally simpler than the cup on type. In particular, a dripper comprised of a bag main body made of a water-filterable sheet which contains ground coffee, and a hooking member made of paper or another material glued on the side of the bag main body to hook the bag main body on a cup, can be manufactured at low cost and save resource materials. The dripper itself can be made compact. However the dripper is soaked in brewed coffee liquid in a cup when brewing coffee, which makes it difficult to obtain the good taste of coffee made by an original paper drip type. Also, the dripper soaked in a hot brewed coffee liquid may cause scalding when the dripper is disposed after brewing coffee.

As described above, various cup on type and cup in type products are on the market as drip bags, and although each has advantages and disadvantages, there exists no drip bag which has the advantages of both types, that is, good tasting coffee, easy to set on a cup and easy to pour hot water of the cup on type, and the compact structure and low manufacturing cost of the cup in type.

### SUMMARY OF THE INVENTION

It is accordingly an object of the present invention to solve the above problems of prior art, and to provide a new drip bag of the type suspended above the liquid to be brewed and which can make tasty coffee equivalent to coffee made by an original paper drip type, comprised of a simple structure, and which can be set on a cup very easily with a stable form after setting on a cup, and can be disposed easily and safely after brewing coffee.

To achieve the above object, the present invention provides a drip bag comprising a bag main body made of water-filterable sheet material having an opening part at the top end, and a hooking member made of a thin plate material disposed on two oppositely facing outer surfaces of the bag main body, wherein the hooking member comprises an edge part formed along the edge sides, an arm part which is inside the edge part and can be pulled up and away from the bag main body, and a tongue part formed inside the arm part, wherein the edge part and the arm part are continuous at one end, top or bottom, of the arm part, the arm part and the tongue part are continuous at the other end, top or bottom, of the arm part, and either the edge part or the tongue part is glued on the outer surface of the bag main body.

The drip bag of the present invention comprises the bag main body made of water-filterable sheet material and the hooking members disposed on the outer surfaces of the bag main body. This hooking member can be easily obtained by, for example, making a specific cut line into the rectangular thin plate material. This means that the drip bag of the present invention can save resource materials and can be manufactured at low cost.

This hooking member further comprises the edge part formed at the edge side of the hooking member, the arm part formed inside the edge part which can be pulled up, and the tongue part formed inside the arm part, wherein the edge part and the arm part are continuous at one end, top or bottom, of the arm part, and the arm part and the tongue part are continuous at the other end, top or bottom, of the arm part. In other words, the edge part and the arm part are continuous at the top end of the arm part and the arm part and the tongue part are continuous at the bottom end of the arm part, or the edge part and the arm part are continuous at the bottom end of the arm part, and the arm part and the tongue part are continuous at the top end of the arm part. And either the edge part or the tongue part is glued on the two facing outer surfaces of the bag main body.

Therefore when the tongue part is glued on the outer surface of the bag main body, pulling up the arm part raises the edge part as well, which makes it possible to hook the drip bag on the sidewall of a cup, and when the edge part is glued on the outer surface of the bag main body, the tongue part is pulled up along with the arm part, which makes it possible to hook the drip bag on the sidewall of the cup. In this case, the bag main body is pulled in opposite directions, away from the facing two surfaces, by the arm parts, and the drip bag is suspended at the top center of the cup in a state where the opening part at the top end of the bag main body is wide open. The sidewall of the cup is sandwiched by the edge part or the tongue part and the arm part, and the outer surface of the sidewall of the cup is pressed by the edge part or the tongue part, therefore the drip bag is secured at the top of the cup in an extremely stable state.

Therefore according to this drip bag, the drip bag can be stably set at the top of a cup by an extremely easy setting method. Also according to this drip bag, the opening part of the bag main body is opened wide when the drip bag is set on the cup, so according to this drip bag, pouring hot water to brew coffee is easy. This drip bag is hooked to the top of the cup, and is still above the level of brewed coffee liquid after brewing coffee. This makes it possible to make delicious coffee, just like the original paper drip type. Also, the drip bag is not soaked in the brewed coffee liquid after brewing the coffee, therefore disposal of the drip bag after brewing coffee is easy, free from the danger of scalding.

The coffee drip bag of the present invention comprises the drip bag as above, wherein ground coffee is filled into the bag main body and the opening part of the bag main body is closed. So according to this coffee drip bag, a consumer can make tasty coffee casually, easily and safely merely by opening the top part, setting the coffee drip bag on a cup and pouring hot water.

### BRIEF DESCRIPTION OF THE DRAWINGS

Fig. 1A is a plane view of a coffee drip bag of the present invention, and Figs. 1B and 1C are explanatory drawings depicting the state of use;
Fig. 2 is a plane view of a hooking member to be used for the drip bag of the present invention;
Fig. 3 is a plane view of a hooking member to be used for the drip bag of the present invention;
Fig. 4 is a plane view of a hooking member to be used for the drip bag of the present invention;
Figs. 5A and 5B are explanatory drawings depicting the state of using the coffee drip bag of the present invention;
Fig. 6 is a plane view of a hooking member to be used for the drip bag of the present invention;
Fig. 7 is an explanatory drawing depicting a state of using the coffee drip bag of the present invention; and
Fig. 8 is a plane view of a hooking member to be used for the drip bag of the present invention.

### DESCRIPTION OF THE PREFERRED EMBODIMENTS

The embodiments of the present invention will now be described with reference to the accompanying drawings. Throughout the drawings the same reference characters denote similar or same composing elements.

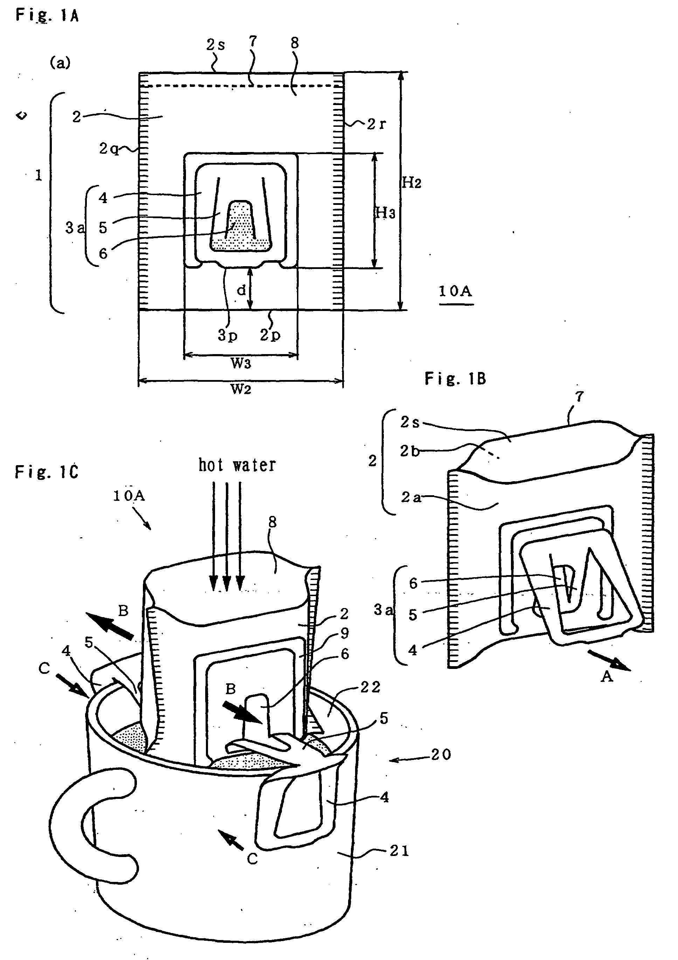

Fig. 1A shows a plane view of a coffee drip bag 10A of an embodiment of the present invention, and Figs. 1B and 1C are explanatory drawings depicting how to use it.

In this coffee drip bag 10A (Fig. 1A), ground coffee is filled in a drip bag 1 of the present invention, the opening part 8 at the top end is closed, and the top end has a perforation 7.

The drip bag 1 comprises a bag main body 2 made of water-filterable sheet material and hooking members 3a disposed on the two facing outer surfaces of the bag main body 2.

The bag main body 2 has two rectangular faces 2a and 2b at the front and back, facing each other. This bag main body 2 is formed, for example, by folding one rectangular sheet in two, where the crease is the bottom edge 2p of the rectangular faces 2a and 2b, both side edges 2q and 2r of the rectangular faces 2a and 2b are joined, and the top end 2s remains as an opening.

For the water-filterable sheet material of the bag main body 2, various materials which can contain a predetermined amount of ground coffee and brew coffee when hot water is poured can be used. For example, woven fabric or non-woven fabric made of such synthetic fibers as polyester, nylon, polyethylene, polypropylene and vinylene, such semi-synthetic fibers as rayon, such natural fibers as paper mulberry and paper bush (Mitsumata) or derivative compound fibers; mixed paper made from Manila hemp, wood pulp, polypropylene fiber and other materials; and paper such as tea bag base paper can be used. As water-filterable sheet material, three-layer structured sheet material comprised of a first layer made from polyester, a second layer made from mixed paper of regular polyester and low melting point polyester, and a third layer comprised of melt blown non-woven fabric made from extremely fine fibers of polypropylene is preferable in terms of taste, smell, flavor and brewing time.

The hooking member 3a, on the other hand, is comprised of thin plate material, such as a paper and a plastic sheet, and is disposed on the outer surfaces of the rectangular faces 2a and 2b, the front and back, of the bag main body 2. In the present invention, this hooking member 3a comprises an edge part 4 formed at the edge side of the hooking member 3a, an arm part 5 formed inside the edge part 4, and the tongue part 6 formed inside the arm part 5. In this hooking member 3a, the arm part 5 can be pulled up from the bag main body 2. The edge part 4 and the arm part 5 are continuous at one end, top or bottom, of the arm part 5, and the arm part 5 and the tongue part 6 are continuous at the other end, top or bottom, of the arm part 5, and either the edge part 4 or the tongue part 6 is glued on the outer surface of the bag main body 2. For example, the edge part 4 and the arm part 5 are continuous at the top end of the arm part 5, the arm part 5 and the tongue part 6 are continuous at the bottom end of the arm part 5, and the base of the arm part 5 and the tongue part 6 (portion filled with dots in Fig. 1A) are glued on the outer surface of the bag main body 2, as shown in Figs. 1A, 1B and 1C.

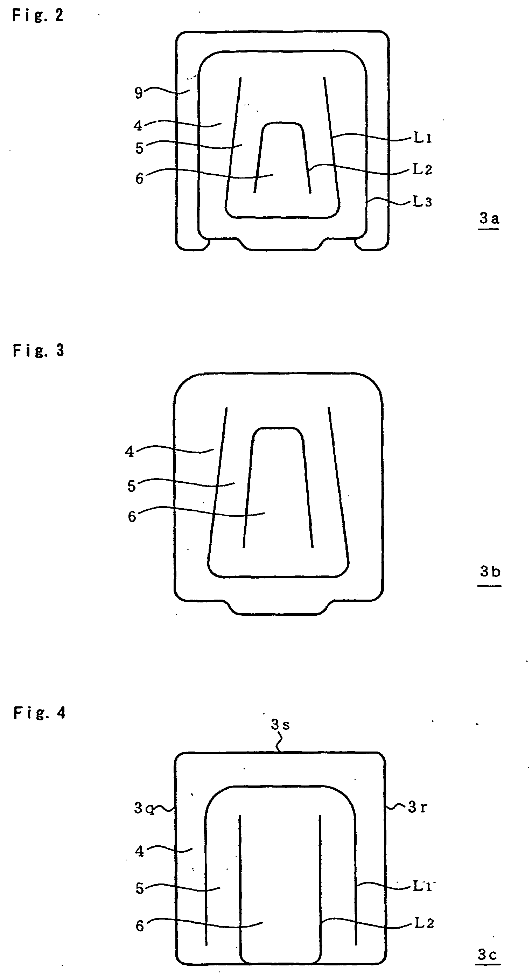

Fig. 2 is a plane view of the hooking member 3a. As Fig. 2 shows, the hooking member 3a has a rectangular shape with the four corners rounded. The edge part 4 is formed in a strip all around the hooking member 3a, wherein the edge part 4 and the arm part 5 are partitioned by the first cut line (outer cut line) L1 which is roughly along both sides and the bottom side of the rectangular hooking member 3a, and the arm part 5 and the tongue part 6 are partitioned by the second cut line (inner cut line) L2, which is inside the outer cut line L1, and is roughly along both sides and the top side of the rectangular hooking member 3a.

Also in this hooking member 3a, a reinforcing piece 9, which is partitioned from the edge part 4 by the third cut line L3, is formed peripheral area the edge part 4, and this reinforcing piece 9 is glued on the outer surface of the bag main body 2.

The size of the hooking member 3a is not specified, but as described later, it is preferable that the height H3 of the hooking member 3a be 35 ∼ 65mm and the width W3 be 35 ∼ 55mm when the height H2 of the bag main body 2 is 70 - 100mm and width W2 is 65 ∼ 85mm, for example, since when the coffee drip bag 10A is hooked to the cup 20 (see Fig. 1C), the stability of the coffee drip bag 10A drops if the size of the hooking member 3a is too small, and the opening of the opening part 8 at the top end of the bag main body 2 becomes too small if the size of the hooking member 3a is too big.

For the gluing position of the hooking member 3a on the bag main body 2, if the gluing position is too low, the stability of the bag main body 2 drops, and if the gluing position is too high, the bottom of the bag main body 2 soaks in the brewed coffee liquid when the coffee drip bag 10A is hooked to the cup 20, and unnecessary components seep into the coffee liquid from the ground coffee in the bag main body 2. So normally, the hooking member 3a is glued on the bag main body 2 such that the space d between the bottom side 3p of the hooking member 3a and the bottom side 2p of the bag main body 2 becomes 10 ∼ 25mm.

As a method for brewing coffee using the coffee drip bag 10A, the bag main body 2 is opened by cutting off the top end part of the bag main body 2 along the perforation 7, and the edge parts 4 are pulled up in the direction shown by the arrow A first, as shown in Fig. 1B. Then as Fig. 1C shows, the edge parts 4 are pulled up more to match with the diameter of the opening part 22 of the cup 20, and the edge parts 4 are hooked to the sidewall 21 of the cup 20. The bag main body 2 is now pulled in the opposite directions (arrow B) from the facing two surfaces by the arm parts 5, and is suspended at the top center of the cup 20 in a state where the opening part 8 is wide open. The shape of the opening is maintained to an optimum by the reinforcing pieces 9 to prevent the opening part 8 from being closed when the rectangular faces 2a and 2b on the front and back of the bag main body 2 are bent.

The sidewall 21 of the cup 20 is sandwiched by the arm parts 5 and the edge parts 4, and the outer surface of the sidewall 21 of the cup 20 is pressed by the edge parts 4 in the arrow C direction, so the coffee drip bag 10A is secured at the top of the cup 20 in an extremely stable state.

In this case, the coffee drip bag 10A is secured in a stable state no matter what shape and size of the cup 20, and no matter what the thickness of the wall of the cup 20.

After the coffee drip bag 10A is easily set on the cup 20 in an extremely stable state, hot water is poured into the bag main body 2 through the opening part 8. In this case, the opening part 8 is set in a wide-open state, so pouring hot water when brewing coffee is also easy. Since the coffee drip bag 10A is hooked at the top of the cup 20, the drip bag 1 is above the level of the brewed coffee liquid even after brewing coffee. Therefore tasty coffee equivalent to coffee made by an original paper drip type can be made, and disposal of the coffee drip bag 10A after brewing coffee is easy, free from the danger of scalding.

In the above description, an example when the coffee drip bag 10A is set on the cup 20 after opening the coffee drip bag 10A by cutting off the perforation 7 was shown, but a method for using the coffee drip bag 10A of the present invention is not restricted by this, and the coffee drip bag 10A may be opened after the coffee drip bag 10A is set on the cup 20.

In the present invention, the hooking member can have various aspects.

For example, as shown in the hooking member 3b in Fig. 3, the reinforcing piece 9 may be omitted from the above mentioned hooking member 3a. In this case, it is preferable to form the tongue part 6, which is glued on the outer surface of the bag main body 2, to be relatively large, so that the opening shape of the bag main body 2 can be maintained to an optimum when the coffee drip bag is used.

While the edge part 4 and the arm part 5 are continuous at the top end of the arm part 5, the arm part 5 and the tongue part 6 are continuous at the bottom end of the arm part 5, and the tongue part 6 is glued on the outer surface of the bag main body 2 in the case of the above mentioned hooking member 3a, it is also possible that the edge part 4 and the arm part 5 are continuous at the bottom end of the arm part 5, the arm part 5 and the tongue part 6 are continuous at the top end of the arm part 5, and the edge part 4 is glued on the outer surface of the bag main body 2.

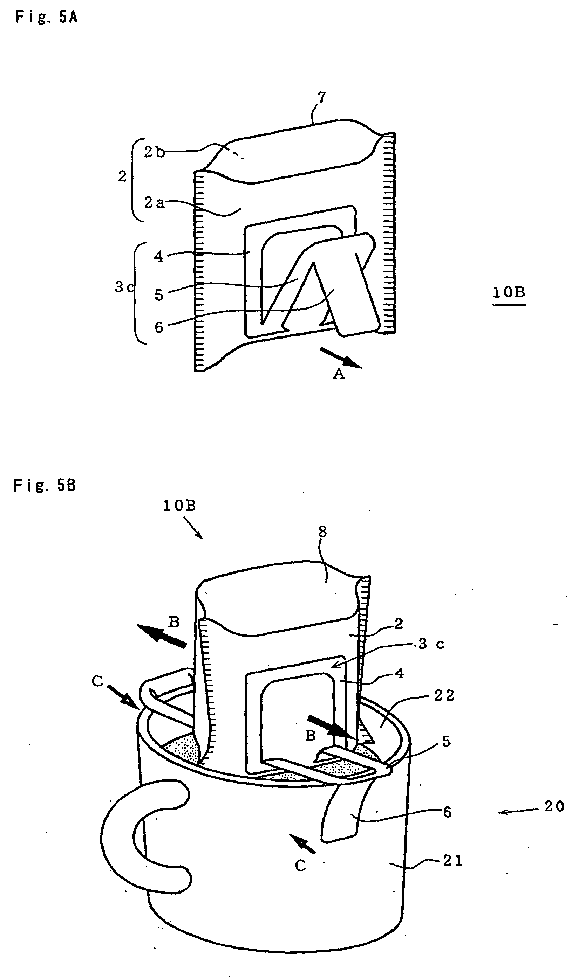

For example, as the hooking member 3c in Fig. 4 shows, it is acceptable that the edge part 4 is formed in a strip at both sides 3q and 3r and the top side 3s, the edge part 4 and the arm part 5 are partitioned by the first cut line (outer cut line) L1 which is roughly along both sides 3q and 3r and the top side 3s of the rectangular hooking member 3c, and the arm part 5 and the tongue part 6 are partitioned by the second cut line (inner cut line) L2 inside the outer cut line L1, which is roughly along both sides 3q and 3r of the rectangular hooking member 3c. When this hooking member 3c is disposed on the outer surface of the bag main body 2, the edge part 4 is glued on the outer surface of the bag main body 2 so that the arm part 5 and the tongue part 6 can be pulled up.

Figs. 5A and 5B are explanatory drawings depicting the state of using the coffee drip bag 10B where the hooking member 3c in Fig. 4 is disposed on the bag main body 2.

When coffee is brewed using this coffee drip bag 10B, the tongue part 6 of the opened bag main body 2 is pulled up in the arrow A direction first, as shown in Fig. 5A. Then as Fig. 5B shows, the tongue part 6 is pulled up more to match the diameter of the opening part 22 of the cup 20, and the tongue part 6 is hooked to the sidewall 21 of the cup 20. In this case, just like the case of the coffee drip bag 10A in Fig. 1C, the bag main body 2 is pulled in opposite directions (arrow B) away from the two facing surfaces by the arm parts 5, and the drip bag is suspended at the top center of the cup 20 in a state where the opening part 8 is wide open.

The sidewall 21 of the cup 20 is sandwiched by the arm parts 5 and the tongue parts 6, and the outer surface of the sidewall 21 of the cup 20 is pressed by the tongue parts 6 in the arrow C direction, so the coffee drip bag 10B is secured at the top of the cup 20 in an extremely stable state.

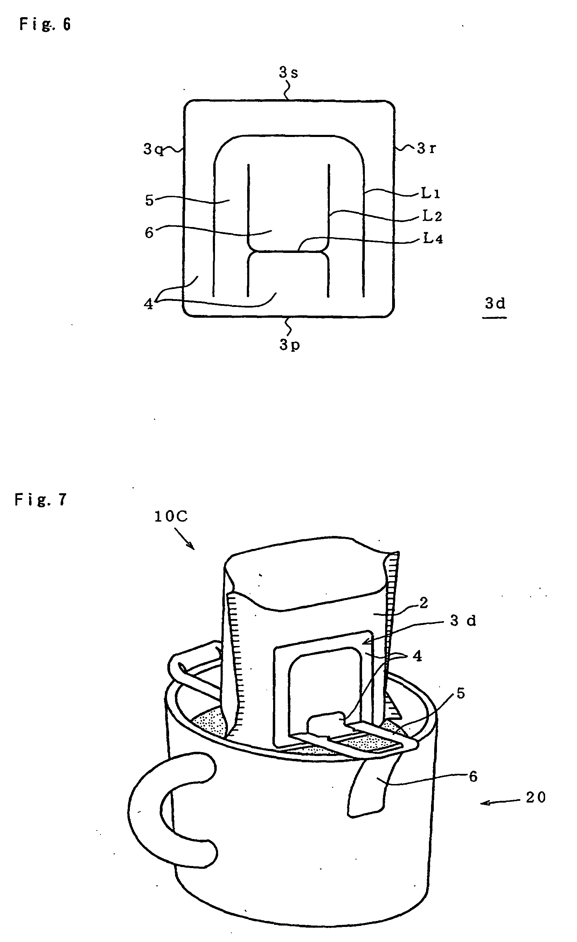

As another hooking member to be used for the coffee drip bag of the present invention, it is also acceptable, as shown in Fig. 6, that the edge part 4 and the arm part 5 are partitioned by the first cut line (outer cut line) L1, which is roughly along both sides 3q and 3r and the top side 3s of the rectangular hooking member 3d, the arm part 5 and the tongue part 6 are partitioned by the second cut line (inner cut line) L2, which is inside the outer cut line L1, and is roughly along both sides 3q and 3r of the rectangular hooking member 3d, and the edge part 4 and the tongue part 6 are partitioned by the fourth cut line (bottom cut line) L4, which is roughly along the bottom side 3p of the rectangular hooking member 3d. Because of this structure, the edge part 4 is formed all around the hooking member 3d roughly in a strip.

The coffee drip bag 10C which has this hooking member 3d is set on the cup 20 as shown in Fig. 7. In this case, the bottom of the bag main body 2 of the coffee drip bag 10C is supported by the hooking member 3d even more stably than the coffee drip bag 10B in Figs. 5A and 5B, so it is preferable to use this coffee drip bag 10C in Fig. 7 rather than the coffee drip bag 10B in Figs. 5A and 5B, depending on the strength of the bag main body 2 or on other conditions.

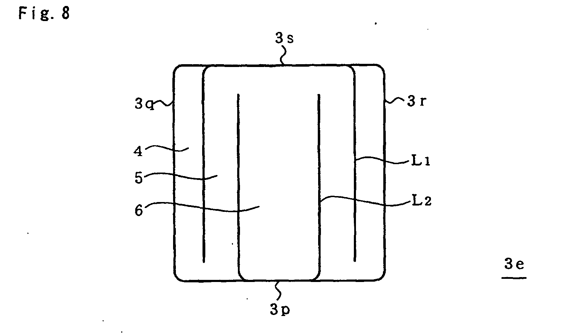

Fig. 8 is a plan view of still another hooking member 3e. In this hooking member 3e, the outer cut line L1, which partitions the edge part 4 and the arm part 5, is formed along both sides 3q and 3r of the hooking member 3e, but is not formed along the top side 3s of the hooking member 3e, therefore the edge part 4 is a strip along both sides 3q and 3r of the hooking member 3e. This means that in a coffee drip bag using this hooking member 3e, the function of the hooking member 3e to support the shape of the top part of the bag main body 2 is weak compared with the coffee drip bags 10A, 10B and 10C in Figs. 1A, 5A and 7. So it is preferable to use this hooking member 3e when the bag main body 2 is strong and rigid.

As described above, in the present invention, aspects of the hooking member can be set according to the materials and other conditions of the bag main body and the hooking member.

The present invention can be embodied in still other ways. For example, the perforation 7 of the top end of the bag main body 2 of the coffee drip bags 10A, 10B and 10C is formed to make opening of this part easy, but this part may be sealed by thermal adhesion so as to easily peal off this part, instead of the perforation 7.

The drip bag or the coffee drip bag where ground coffee is filled in the drip bag according to the present invention, can be set on a cup extremely easily, and has a stable shape after setting, and therefore pouring hot water is easy. Also the bottom end of the bag main body is above the cup when the coffee drip bag is set on a cup, therefore the bag main body is not soaked in brewed coffee liquid even after brewing coffee. As a consequence, tasty coffee equivalent to coffee made by an original paper drip type can be made. Also the coffee drip bag of the present invention can be easily and safely disposed after brewing coffee.

The present invention provides a drip bag which can be very easily set on a cup, has astable shape after setting, can make tasty coffee equivalent to coffee made by an original paper drip type, and can be disposed easily and safely after brewing coffee.

## Claims

1. A drip bag (1) comprising:
a bag main body (2) made of water-filterable sheet material having an opening part (8) at the top end (25); and
a hooking member (3) made of a thin plate material disposed on two oppositely facing outer surfaces (2a,2b) of the bag main body, the hooking member (3) comprises an edge part (4) formed along the edge sides (2q,2r), an arm part (5) which is inside the edge part (4) and can be pulled up and away from the bag main body (2), and a tongue part (6) formed inside the arm part (5), wherein the edge part (4) and the arm part (5) are continuous at one end, top or bottom, of the arm part, the arm part (5) and the tongue part (6) are continuous at the other end, top or bottom, of the arm part, and either the edge part (4) or the tongue part (6) is glued on the outer surface (2a,2b) of the bag main body (2).

2. The drip bag according to Claim 1, wherein the edge part and the arm part are continuous at the top end of the arm part, the arm part and the tongue part are continuous at the bottom end of the arm part, and the base of the arm part and the tongue part are glued on the outer surface of the bag main body.

3. The drip bag according to Claim 2, wherein a reinforcing piece is glued on the outer surface of the bag main body at the peripheral area of the edge part.

4. The drip bag according to Claim 2 or Claim 3, wherein the hooking member is comprised of a rectangular thin plate material, the edge part is formed all around the hooking member in a strip, the edge part and the arm part are partitioned by an outer cut line which is roughly along both sides and the bottom side of the rectangular hooking member, and the arm part and the tongue part are partitioned by an inner cut line which is inside the outer cut line and is roughly along both sides and the top side of the rectangular hooking member.

5. The drip bag according to Claim 1, wherein the edge part and the arm part are continuous at the bottom end of the arm part, the arm part and the tongue part are continuous at the top end of the arm part, and the edge part is glued on the outer surface of the bag main body.

6. The drip bag according to Claim 5, wherein the hooking member is comprised of a rectangular thin plate material, the edge part is formed on both sides and the top side of the rectangular hooking member in a strip, the edge part and the arm part are partitioned by an outer cut line which is roughly along the both sides and the top side of the rectangular hooking member, and the arm part and the tongue part are partitioned by an inner cut line which is inside the outer cut line and is roughly along both sides of the rectangular hooking member.

7. The drip bag according to Claim 4, wherein the hooking member is comprised of a rectangular thin plate material, the edge part is formed all around the hooking member in a strip, the edge part and the arm part are partitioned by an outer cut line which is roughly along both sides and the top side of the rectangular hooking member, the arm part and the tongue part are partitioned by an inner cut line which is inside the outer cut line and is roughly along both sides of the rectangular hooking member, and the edge part and the tongue part are partitioned by a bottom cut line which is roughly along the bottom side of the rectangular hooking member.

8. A coffee drip bag comprising the drip bag according to any one of Claims 1 to 7, wherein ground coffee is filled in the drip bag and the top end of the bag main body is closed.

9. The coffee drip bag according to Claim 8, wherein a perforation is at the top end of the bag main body so as to be opened easily.

## Patentansprüche

1. Tropfbeutel (1) mit:
einem Beutelhauptkörper (2), hergestellt aus einem wasserfilterfähigen Blattwerkstoff mit einem Öffnungsteil (8) an dem oberen Ende (25); und
einem Hakenteil (3), hergestellt aus einem dünnen Plattenwerkstoff, vorgesehen an zwei sich. gegenseitig gegenüberliegenden äußeren Oberflächen (2a, 2b) des Beutelhauptkörpers, **dadurch gekennzeichnet dass** das Hakenteil aufweist: ein entlang der Kantenseiten (2q, 2r) ausgebildetes Kantenteil (4), ein innerhalb des Kantenteils (4) angeordnetes Armteil (5), das nach oben und vom Beutelhauptkörper (2) weggezogen werden kann, und ein innerhalb des Armteils (5) ausgebildetes Zungenteil (6), wobei das Kantenteil (4) und das Armteil (5) an einem Ende oben oder unten bei dem Armteil kontinuierlich sind, das Armteil (5) und das Zungenteil (6) an dem anderen Ende oben oder unten bei dem Armteil kontinuierlich sind, und entweder das Kantenteil (4) oder das Zungenteil (6) an der äußeren Oberfläche (2a, 2b) des Beutelhauptkörpers (2) angeklebt sind.

2. Tropfbeutel gemäß Anspruch 1, wobei das Kantenteil und das Armteil am oberen Ende des Armteils kontinuierlich sind, das Armteil und das Zungenteil am unteren Ende des Armteils kontinuierlich sind und die Basis des Armteils und das Zungenteil an der äußeren Oberfläche des Beutelhauptkörpers angeklebt sind.

3. Tropfbeutel gemäß Anspruch 2, wobei ein Verstärkungsstück an der äußeren Oberfläche des Beutelhauptkörpers im Randbereich des Kantenteils angeklebt ist.

4. Tropfbeutel gemäß Anspruch 2 oder 3, wobei das Hakenteil aus einem rechteckigen, dünnen Plattenwerkstoff besteht, das Kantenteil rund um das gesamte Hakenteil als Streifen ausgebildet ist, das Kantenteil und das Armteil durch eine äußere Schnittlinie geteilt sind, die ungefähr entlang beiden Seiten und der unteren Seite des rechteckigen Hakenteils verläuft, und das Armteil und das Zungenteil durch eine innere Schnittlinie geteilt sind, die innerhalb der äußeren Schnittlinie und ungefähr entlang beiden Seiten und der oberen Seite des rechteckigen Hakenteils verläuft.

5. Tropfbeutel gemäß Anspruch 1, wobei das Kantenteil und das Armteil bei dem unteren Ende des Armteils kontinuierlich sind, das Armteil und das Zungenteil bei dem oberen Ende des Armteils kontinuierlich sind, und das Kantenteil an der äußeren Oberfläche des Beutelhauptkörpers angeklebt ist.

6. Tropfbeutel gemäß Anspruch 5, wobei das Hakenteil aus einem rechteckigen dünnen Plattenwerkstoff besteht, das Kantenteil an beiden Seiten und der oberen Seite des rechteckigen Hakenteils als Streifen ausgebildet ist, das Kantenteil und das Armteil durch eine äußere Schnittlinie geteilt sind, die ungefähr entlang beiden Seiten und der oberen Seite des rechteckigen Hakenteils verläuft, und das Armteil und das Zungenteil durch eine innere Schnittlinie geteilt sind, die innerhalb der äußeren Schnittlinie und ungefähr entlang beiden Seiten des rechteckigen Hakenteils verläuft.

7. Tropfbeutel gemäß Anspruch 4, wobei das Hakenteil aus einem rechteckigen dünnen Plattenwerkstoff besteht, das Kantenteil rund um das gesamte Hakenteil als Streifen ausgebildet ist, das Kantenteil und das Armteil durch eine äußere Schnittlinie geteilt sind, die ungefähr entlang beiden Seiten und der oberen Seite des rechteckigen Hakenteils verläuft, das Armteil und das Zungenteil durch eine innere Schnittlinie geteilt sind, die innerhalb der äußeren Schnittlinie und in Groben entlang beiden Seiten des rechteckigen Hakenteils verläuft, und das Kantenteil und das Zungenteil durch eine untere Schnittlinie geteilt sind, die ungefähr entlang der unteren Seite des rechteckigen Hakenteils verläuft.

8. Kaffeetropfbeutel mit dem Tropfbeutel gemäß jedem der Ansprüche von 1 bis 7, wobei gemahlener Kaffee in den Tropfbeutel eingefüllt ist und das obere Ende des Beutelhauptkörpers geschlossen ist.

9. Kaffeetropfbeutel gemäß Anspruch 8, wobei sich eine Perforierung an dem oberen Ende des Beutelhauptkörpers befindet, um so leicht geöffnet werden zu können.

## Revendications

1. Sachet filtre (1) comprenant :
un corps principal de sachet (2) constitué d'une matériau de feuille filtrant l'eau ayant une partie ouverture (8) au niveau de l'extrémité supérieure (2s) ; et
un élément d'accrochage (3) constitué d'un matériau de plaque fin disposé sur deux surfaces externes se faisant face de manière opposée (2a, 2b) du corps principal de sachet, **caractérisé en ce que** l'élément d'accrochage (3) comprend une partie bord (4) formée le long des côtés du bord (2q, 2r), une partie bras (5) située à l'intérieur de la partie bord (4) et pouvant être tirée vers le haut et ôtée du corps principal de sachet (2), et une partie langue (6) formée à l'intérieur de la partie bras (5), dans lequel la partie bord (4) et la partie bras (5) sont continues au niveau d'une extrémité, supérieure ou inférieure, de la partie bras, la partie bras (5) et la partie langue (6) sont continues au niveau de l'autre extrémité, supérieure ou inférieure, de la partie bras, et soit la partie bord (4) soit la partie langue (6) est collée sur la surface externe (2a, 2b) du corps principal de sachet (2).

2. Sachet filtre selon la revendication 1, dans lequel la partie bord et la partie bras sont continues au niveau de l'extrémité supérieure de la partie bras, la partie bras et la partie langue sont continues au niveau de l'extrémité inférieure de la partie bras, et la base de la partie bras et la partie langue sont collées sur la surface externe du corps principal de sachet.

3. Sachet filtre selon la revendication 2, dans lequel une pièce de renfort est collée sur la surface externe du corps principal de sachet au niveau de la zone périphérique de la partie bord.

4. Sachet filtre selon la revendication 2 ou la revendication 3, dans lequel l'élément d'accrochage est constitué d'un matériau de plaque fin et rectangulaire, la partie bord est formée tout autour de l'élément d'accrochage sous la forme d'une bande, la partie bord et la partie bras sont séparées par une ligne de coupe externe globalement disposée le long des deux côtés et du côté inférieur de l'élément d'accrochage rectangulaire, et la partie bras et la partie langue sont séparées par une ligne de coupe interne située à l'intérieur de la ligne de coupe externe et qui est globalement disposée le long des deux côtés et du côté supérieur de l'élément d'accrochage rectangulaire.

5. Sachet filtre selon la revendication 1, dans lequel la partie bord et la partie bras sont continues au niveau de l'extrémité inférieure de la partie bras, la partie bras et la partie langue sont continues au niveau de l'extrémité supérieure de la partie bras, et la partie bord est collée sur la surface externe du corps principal de sachet.

6. Sachet filtre selon la revendication 5, dans lequel l'élément d'accrochage est constitué d'un matériau de plaque fin et rectangulaire, la partie bord est formée sur les deux côtés et sur le côté supérieur de l'élément d'accrochage rectangulaire sous la forme d'une bande, la partie bord et la partie bras sont séparées par une ligne de coupe externe globalement disposée le long des deux côtés et du côté supérieur de l'élément d'accrochage rectangulaire, et la partie bras et la partie langue sont séparées par un ligne de coupe interne située à l'intérieur de la ligne de coupe externe et qui est globalement disposée le long des deux côtés de l'élément d'accrochage rectangulaire.

7. Sachet filtre selon la revendication 4, dans lequel l'élément d'accrochage est constitué d'un matériau de plaque fin et rectangulaire, la partie bord est formée tout autour de l'élément d'accrochage sous la forme d'une bande, la partie bord et la partie bras sont séparées par une ligne de coupe externe globalement disposée le long des deux côtés et du côté supérieur de l'élément d'accrochage rectangulaire, la partie bras et la partie langue sont séparées par une ligne de coupe interne située à l'intérieur de la ligne de coupe externe et qui est globalement disposée le long des deux côtés de l'élément d'accrochage rectangulaire, et la partie bord et la partie langue sont séparées par une ligne de coupe inférieure globalement disposée le long du côté inférieur de l'élément d'accrochage rectangulaire.

8. Sachet filtre pour le café comprenant un sachet filtre selon l'une quelconque des revendications 1 à 7, dans lequel le sachet filtre est rempli de café moulu et l'extrémité supérieure du corps principal de sachet est fermée.

9. Sachet filtre pour le café selon la revendication 8, dans lequel une perforation est située au niveau de l'extrémité supérieure du corps principal de sachet de manière à ce qu'on puisse l'ouvrir facilement.
